(19) Europäisches Patentamt
European Patent Office
Office européen des brevets

(11) Numéro de publication: **0 236 224**
**A1**

# (12) DEMANDE DE BREVET EUROPEEN

(21) Numéro de dépôt: **87400431.0**

(22) Date de dépôt: **26.02.87**

(51) Int. Cl.[4]: **E 04 F 13/08**

(30) Priorité: **27.02.86 FR 8602744**

(43) Date de publication de la demande: **09.09.87 Bulletin 87/37**

(84) Etats contractants désignés: **BE DE NL**

(71) Demandeur: **PLATRES LAFARGE**
**5 Avenue de l'Egalité**
**F-84800 Isle-Sur Sorgue (FR)**

(72) Inventeur: **Arese, Roger**
**3 Résidence des Aubépines**
**F-84800 l'Isle-sur-Sorgue (FR)**

(74) Mandataire: **Harlé, Robert et al**
**c/o Cabinet Harlé & Phélip 21, rue de la Rochefoucauld**
**F-75009 Paris (FR)**

## (54) Dispositif d'entretoisement réglable pour l'appui d'éléments sur un substrat.

(57) La présente invention a pour objet un dispositif d'entretoisement réglable pour l'appui d'éléments plans, par exemple de plaques de plâtre P sur un substrat, par exemple un mur M. Selon l'invention, on prévoit une structure d'entretoisement comportant un élément de support et d'entretoisement 2 destiné à être fixé sur le mur M sur lequel est monté un élément de raccordement 3 conformé pour venir se fixer dans un montant ou profilé 1 sur lequel vient en appui la plaque de plâtre P.

E
P
1
2a
3
2
M

EP 0 236 224 A1

## Description

Dispositif d'entretoisement réglable pour l'appui d'éléments sur un substrat

La présente invention a pour objet un dispositif d'entretoisement réglable pour l'appui d'éléments plans sur un substrat .Elle vise particulièrement un dispositif d'entretoisement réglable et utilisable pour l'appui de plaques , par exemple de plaques de plâtre , sur une paroi,par exemple un mur.

Ce dispositif d'entretoisement réglable est destiné à compléter le système de doublage d'isolation thermique et phonique sur ossature métallique, soit dans des maisons d'habitation, soit dans des locaux recevant du public , soit dans des locaux industriels,par exemple des bureaux et des ateliers.

Le système de doublage sur ossature métallique tel qu'utilisé actuellement , est constitué de rails ou de cornières en partie haute et basse ,les deux montants verticaux venant se fixer sur les rails ou les cornières . Pour la pose d'éléments de grande dimension, par exemple de plaques de plâtre, il s'est avéré que lesdits montants ont besoin à 1,20 m du sol environ d'un appui fixé sur le montant et sur le mur. Les solutions d'entretoisement utilisées jusqu'à présent n'avaient pas donné entièrement satisfaction, en particulier du fait que la pose de tels systèmes était relativement longue, ce qui se traduisait par des coûts de montage relativement élevés .Des dispositifs incorporant des solutions d'entretoisement de ce type sont décrits, par exemple dans les documents CH-A-598438,DE-A-3 127 736, FR-A-2 235.248, FR-A-2 332 398 et FR-A-2 221.608.

La présente invention vise à obvier aux inconvénients précités en fournissant un dispositif d'entretoisement réglable pour l'appui d'éléments plans sur substrat , dispositif qui soit aisé à poser dans le minimum de temps.

La présente invention a donc pour objet un dispositif d'entretoisement réglable pour l'appui d'éléments plans sur un substrat, comportant une structure d'entretoisement comportant un élément support destiné à être fixé sur le substrat (M) et un élément d'entretoisement sur lequel vient se monter un élément de raccordement réglable destiné à venir se fixer sur un élément d'appui pour un élément plan, caractérisé en ce que l'élément support a la forme d'un croisillon au droit de la zone centrale duquel est prévu l'élément d'entretoisement constitué par un tube creux qui présente par exemple un certain nombre de zones filetées, notamment à son extrémité libre, ou bien qui est intérieurement taraudé.

L'élément plan est une plaque de plâtre et la structure d'appui a un profilé en U à double retour interne.

Selon une première forme de réalisation du dispositif d'entretoisement réglable selon l'invention, dans laquelle l'élément d'entretoisement présente un certain nombre de zones filetées, éventuellement séparées par des gorges chanfreinées, au voisinage du filetage, l'élément de raccordement est une pièce à un nombre pair de pans présentant au moins une structure d'accrochage sur les retours,des profilés , et un filetage interne.

Selon une seconde forme de réalisation, l'élément d'entretoisement est un tube creux intérieurement taraudé , tandis que l'élément de raccordement de l'élément d'appui est constitué par une pièce oblongue constituée d'un tube fileté et chanfreiné à une de ses extrémités , et comportant à l'autre extrémité un élément d'accrochage à un nombre pair de pans(4,6,8...) destiné à venir se fixer sur les retours internes du profilé en U.

Chacun des éléments d'accrochage présente sur chaque paire de pans opposés des rainures prévues à des niveaux différents, par exemple sur trois niveaux, et destinées à venir se fixer sur les retours du profilé .

D'autres avantages et caractéristiques de l'invention apparaîtront à la lecture de la description suivante de deux formes non limitatives de réalisation de dispositif d'entretoisement réglable pour appui d'éléments plans sur des substrats , description faite en se référant aux dessins annexés dans lesquels:

Fig.1 est une vue en coupe d'un dispositif d'entretoisement réglable selon l'invention à l'état monté entre un montant profilé et un mur;

Fig.2 est une vue latérale d'une première variante de réalisation d'un élément d'accrochage du dispositif d'entretoisement de l'invention sur un profilé;

Figs.3A, 3B, 3C représentent en perspective différents profilés destinés à recevoir l'élément de raccordement de la figure 2;

Figs.4A et 4B sont respectivement des vues de face et de côté,cette dernière est partiellement arrachée , d'une première forme de réalisation d'élément d'entretoisement selon l'invention;

Fig.5 est une vue latérale d'une seconde variante de réalisation d'éléments de raccordement;

Figs.6A, 6B ,6C représentent respectivement des profilés destinés à recevoir l'élément de raccordement de la figure 5;

Figs.7A et 7B représentent respectivement une vue de face et de profil, partiellement arrachée, d'une seconde forme de réalisation d'éléments d'entretoisement.

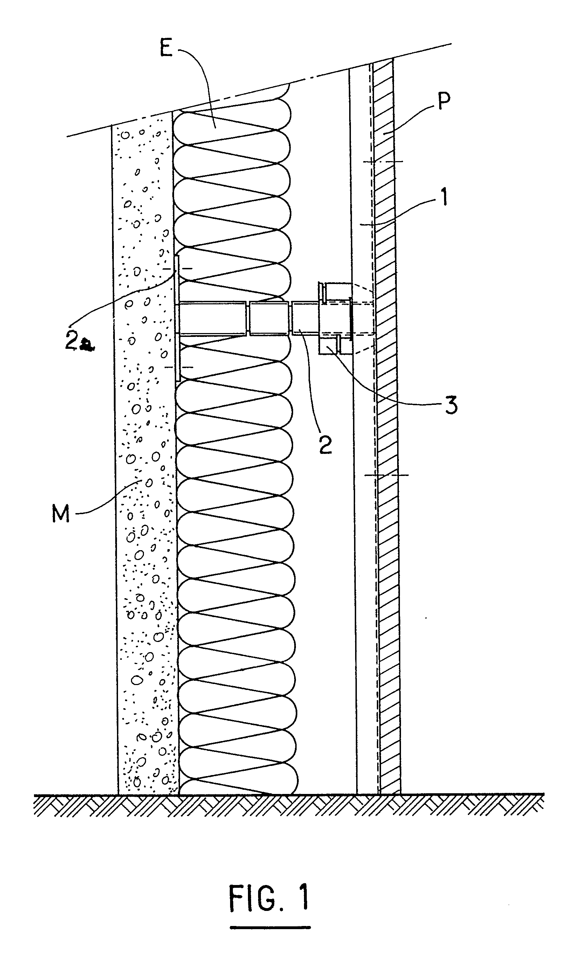

En se reportant plus particulièrement à la figure 1, on voit que l'élément d'entretoisement 2 est fixé au mur M et traverse une épaisseur d'isolant E. Sur l'extrémité libre de l'élément d'entretoisement est vissé un élément de raccordement 3 fixé dans un montant ou fourrure 1 sur laquelle vient en appui la plaque de plâtre P.

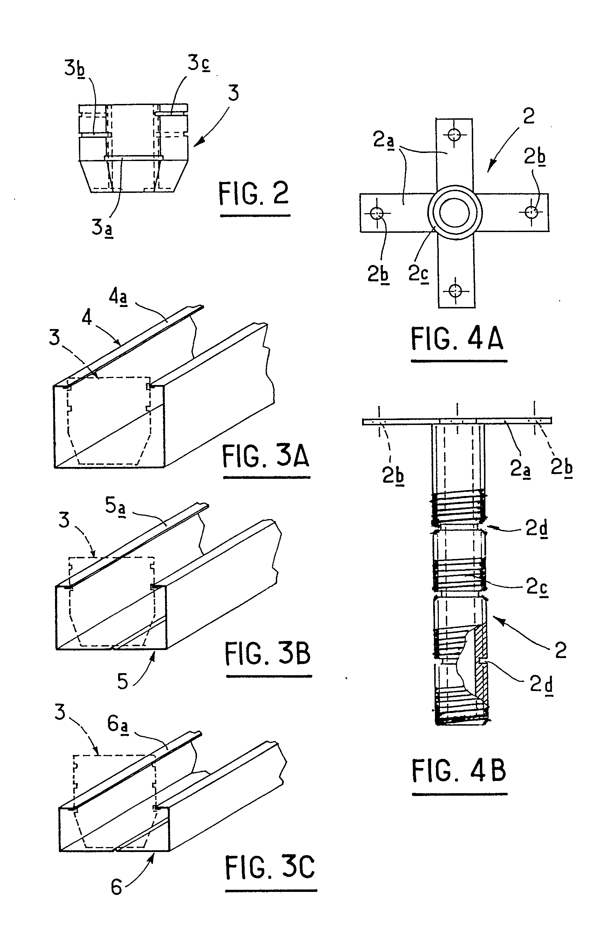

Sur la figure 2 est représenté plus en détail l'élément de raccordement 3 qui présente sensiblement la forme intérieure filetée et extérieure d'un écrou à six pans . Sur chaque paire de pans opposés sont prévues sur trois niveaux des rainures 3a, 3b , 3c, destinées à venir se fixer suivant les différentes hauteurs de niveaux et l'orientation avant fixage voulue dans des fourrures ou profilés de hauteur correspondante 4, 5, 6,en forme de U et présentent des retours internes 4a, 5a, 6a, respectivement, voir figures 3A, 3B, 3C.

Sur les figures 4A, 4B, est représenté un élément d'entretoisement de longueur réglable , comportant une pièce d'appui qui est constituée par un croisillon 2a dont chaque branche comporte un trou traversant 2b pour sa fixation au mur M. Cet élément d'entretoisement réglable est fileté et chanfreiné d'une part, à son extrémité, et d'autre part sur les bords des trois rainures 2d, permettant ainsi de choisir parmi une gamme de quatre longueurs d'entretoisement .

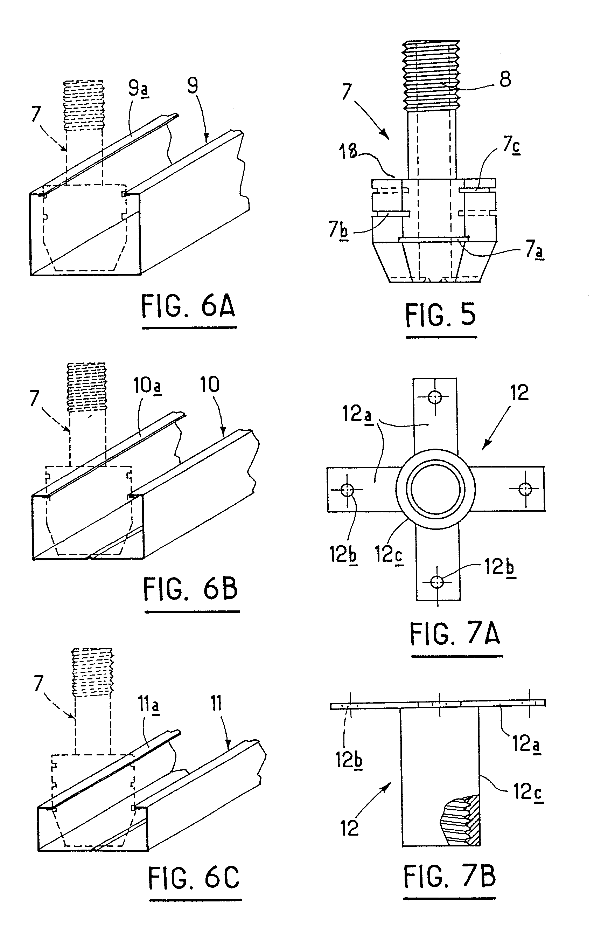

Sur la figure 5 est représentée une seconde forme de réalisation de pièce de raccordement comportant dans une de ses zones d'extrémité un élément similaire 18 à celui 3 représenté sur la figure 2, c'est-à-dire ayant la forme d'un écrou à six pans présentant sur des faces opposées du six pans des rainures d'encliquetage 7a, 7b, 7c, sur trois niveaux différents . Toutefois cette pièce à six pans n'est pas taraudée intérieurement, mais se prolonge par une tige 7 filetée dans sa seconde zone d'extrémité 8.

Cet élément de raccordement 7 , comme représenté sur les figures 6A, 6B et 6C, peut venir se fixer à l'intérieur de profilés 9, 10, 11 dont les retours internes respectifs 9a, 10a, 11a viennent s'insérer respectivement dans les rainures 7c, 7b, 7a.

Cet élément de raccordement 7 est destiné à être vissé dans un élément d'entretoisement 12 présentant une base cruciforme 12a de forme identique à celle de l'élément d'entretoisement de la figure 4a , et pourvu de trous traversant de fixation 12b, le corps 12c de l'élément d'entretoisement étant taraudé intérieurement pour recevoir l'extrémité 8 de la pièce de raccordement 7.

On utilise le dispositif d'entretoisement selon l' invention de la manière suivante .

Dans la forme de réalisation représentée sur les figures 1 à 4, les opérations se déroulent de la façon suivante :

a) on fixe sur les cornières haute et basse le profilé métallique vertical,

b)on clipse la pièce à pans (4,6,8...)dans le profilé La tige filetée, à croisillon, a déjà été prédécoupée à la longueur et vissée au maximum dans la pièce à pans;

c)on dévisse la tige filetée à croisillon jusqu'à ce qu'elle vienne en appui contre le mur. Là, elle est fixée par chevillage ou collage. Dans ce dernier cas, on utilisera avantageusement un produit commercialisé par Plâtres Lafarge sous le nom de PREGYCOLLE 120.

On visse alors l'élément de raccordement 3 sur l'élément d'entretoisement 2c et l'on oriente les six pans de façon à choisir le côté rainuré correspondant de façon que la pièce de raccordement vienne en butée sur le fond du profilé ou fourrure métallique 3, 4, 5,et que les retours d'ailes correspondantes 6a, 5a, 4a se clipsent respectivement dans des rainures ou gorges 3a, 3b, 3c prévues à cet effet . La tête de la pièce de raccordement 3 est conformée en tronc de cône de façon à permettre l'introduction de la tête à six pans et l'écartement des retours avant le fixage.

On voit ainsi que la conception de l'élément d'entretoisement 2c et de l'élément de raccordement 3 rend possible une pluralité de combinaisons de façon à pouvoir positionner le profilé de façon appropriée avant d'y appliquer l'élément plan ou plaque de plâtre P.

On peut utiliser la forme de réalisation des figures 6 et 7 de la même façon , c'est-à-dire en fixant l'élément d'entretoisement 12 au mur et en y visant l'élément de raccordement 7 à la lon gueur voulue tout en prenant garde de bien orienter la tête à six pans de façon que les rainures ou gorges 7a, 7b, 7c viennent se fixer dans les retours correspondants 11a,10a, 9a des profilés 9, 10 et 11. Ce mode de réalisation permet également une pluralité de modes de réglage du dispositif de l'invention.

Ainsi se trouve résolu selon l'invention, le problème de l'entretoisement en appui réglable des éléments plans , par exemple des plaques de plâtre ,de grande dimension , et ce par la coopération d'un élément d'entretoise sement réglable en longueur avec un élément de raccordement conformé pour s'adapter au type de montants profilés utilisés dans la technique usuelle . Les éléments constitutifs du dispositif d'entretoisement réglable selon l'invention sont en toute matière appropriée à l'usage ,c'est-à-dire présentant les qualités de résistance mécanique et de résilience appropriée. On peut par exemple fabriquer ces éléments en matière plastique, en acier, en alliages divers et analogues.

## Revendications

1.Dispositif d'entretoisement réglable pour l'appui d'éléments plans sur un substrat , comportant une structure d'entretoisement (2, 12) comportant un élément support (2a, 12a)destiné à être fixé sur le substrat (M)et un élément d'entretoisement (2c; 12c)sur lequel vient se monter un élément de raccordement réglable (3;7, 8) destiné à venir se fixer sur un élément d'appui (4, 5, 6; 9, 10,11)pour un élément plan (P), caractérisé en ce que l'élément support a la forme d'un croisillon (2a, 12a)au droit de la zone centrale duquel est prévu l'élément d'entretoisement constitué par un tube creux (2c; 12c).

2.Dispositif selon la revendication 1,caractérisé en ce que l'élément d'entretoisement est un tube creux (2c) présentant un certain nombre de zones filetées, notamment à son extrémité libre .

3.Dispositif selon la revendication 1, caractérisé en ce que l'élément d'entretoisement est un tube creux intérieurement taraudé (12c).

4.Dispositif selon la revendication 1, caractérisé en ce que l'élément plan est une plaque de plâtre et la structure d'appui a un profilé en U à double retour interne.

5.Dispositif selon l'une des revendications 1, 2, et 4,caractérisé en ce que l'élément de raccordement est une pièce (3) à un nombre pair de pans présentant au moins une structure d'accrochage (3a, 3b, 3c) sur les retours (6a, 5a, 4a) des profilés (6, 5, 4) ,et un filetage interne.

6.Dispositif selon l'une quelconque des revendications 1, 3 et 4,caractérisé en ce que l'élément de raccordement est une pièce oblongue (7) constituée d'un tube fileté à une extrémité (8) et comportant à l'autre extrémité une pièce à un nombre pair de pans (18) pourvue d'au moins une structure d'accrochage (7a, 7b, 7c) sur les retours internes (11a, 10a, 9a) des profilés (11, 10, 9).

7.Dispositif selon l'une quelconque des revendications 4 et 5, caractérisé en ce que la pièce ou tête à six pans (3, 18) présente sur chaque paire de pans opposés des rainures d'encliquetage (3a, 3b, 3c; 7a, 7c).

8.Dispositif selon la revendication 3,caractérisé en ce que les zones filetées de l'élément d'entretoisement (2) sont séparées par des gorges chanfreinées (2a) au voisinage du filetage.

9.Dispositif selon la revendication 1 ,caractérisé en ce que l'élément support (2,12) en forme de croisillon présente des trous de chevillage (2b, 12b).

E
P
1
2a
3
2
M

FIG. 1

3b
3c
3
3a
4a
4
3
3
5a
5
3
6a
6

FIG. 2

FIG. 3A

FIG. 3B

FIG. 3C

2
2a
2b
2b
2c

FIG. 4A

2b
2a
2b
2d
2c
2
2d

FIG. 4B

7
9a
9

FIG. 6A

7
8
18
7c
7b
7a

FIG. 5

7
10a
10

FIG. 6B

12a
12
12b
12c
12b

FIG. 7A

7
11a
11

FIG. 6C

12b
12a
12c
12

FIG. 7B

Office européen des brevets

# RAPPORT DE RECHERCHE EUROPEENNE

Numero de la demande

EP 87 40 0431

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | DE-A-3 127 736 (FINK) * Page 12, ligne 17 - page 16, ligne 9; figures 1-3 * | 1-3,9 | E 04 F 13/08 |
| D,A | FR-A-2 235 248 (NEOMAT AG) * Page 1, ligne 37 - page 3, ligne 6; figures 1-4 * | 1,4,6, 9 | |
| D,A | CH-A- 598 438 (BRÄNDLI) * Colonne 1, ligne 56 - colonne 3, ligne 13; figures 1-5 * | 1,4,5, 7,9 | |
| D,A | FR-A-2 332 398 (PROFIL-VERTRIEB) * Page 5, ligne 18 - page 8, ligne 36; figures 1-4 * | 1,9 | DOMAINES TECHNIQUES RECHERCHES (Int. Cl.4) |
| D,A | FR-A-2 221 608 (GROUPEMENT D'INTERET ECONOMIQUE DES ARDOISIERES) * Page 2, ligne 21 - page 3, ligne 13; figures 1-4 * | 1 | E 04 F<br>F 16 B |
| A | FR-A-2 199 365 (NEOMAT AG) * Page 2, ligne 23 - page 3, ligne 30; revendications 1,2; figures 1-10 * | 1,2,4, 5 | |

--- -/-

Le présent rapport de recherche a été établi pour toutes les revendications

| Lieu de la recherche | Date d'achèvement de la recherche | Examinateur |
|---|---|---|
| LA HAYE | 22-05-1987 | AYITER J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82

Office européen des brevets

# RAPPORT DE RECHERCHE EUROPEENNE

Numero de la demande

EP 87 40 0431



## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 456 706 (OLLIS Jr.)<br>* Colonne 2, ligne 13 - colonne 4, ligne 15; figures 1-8 *<br>--- | 1,4,5,6 | |
| A | DE-A-2 628 324 (OKA)<br>* Page 4, ligne 22 - page 7, ligne 12; figures 1-4 *<br>----- | 1,4,5,6 | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 22-05-1987 | AYITER J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82